# EUROPEAN PATENT APPLICATION

(11) **EP 4 826 618 A1**
(43) Date of publication of application: **21.10.2026**
(21) Application number: 25748472.5
(22) Date of filing: 14.01.2025
(51) Int. Cl.: G06Q 10/08

(54) **PHYSICAL DISTRIBUTION SIMULATOR DEVICE, METHOD FOR CREATING OPERATION PLAN, PROGRAM, AND METHOD FOR OPERATING IRON MILL**

(30) Priority: 01.02.2024 JP 2024014444
(71) Applicant: JFE Steel Corporation, Tokyo 100-0011 (JP)
(72) Inventor: KUMANO, Akira, Tokyo 100-0011 (JP)
(74) Representative: Scott, Stephen John
(86) International application number: PCT/JP2025/000904
(87) International publication number: WO 2025/164292

(57) **Abstract**

A logistics simulator device includes an input information acquisition module (301), a receiving plan generation module (302), a route module (303), a processing material inventory site module (304), a processing facility warehouse module (306), a processing facility module (305), and a controller module (307). The controller module (307) searches for a transportable route for materials using the route module (303). The route module (303) searches for the transportable route by combining small routes, which are route segments delimited by facility elements.

## Description

### TECHNICAL FIELD

The present disclosure relates to a logistics simulator device, a method of creating an operation plan, a program, and a method of operating a steelworks.

### BACKGROUND

In the transportation operations of processing materials and the like, technology is being developed to improve efficiency by conducting simulations, with operation plans, equipment capacity, and the like as input, and reflecting the results in operations.

For example, Patent Literature (PTL) 1 discloses a simulation program generation device that reduces the burden on designers when creating a simulation program that simulates the operation of each device in a production plant, the movement of workpieces, and process phenomena. Furthermore, PTL 2 recites that the logistics of sending raw materials to the subsequent process can be reproduced and visualized using a logistics simulator device, inventory trends can be displayed, and the feasibility of operations can be determined, thereby enabling refinement of plans and improvement of operations.

### CITATION LIST

### Patent Literature

PTL 1: JP 6468000 B2
PTL 2: JP 2023-118069 A

### SUMMARY

### (Technical Problem)

In a conventional logistics simulation, for example, candidate routes to a destination are presented and a route is selected by eliminating conflicting routes. A route is defined by a combination of a transport origin, a transport destination, and devices used, and the route needs to be redefined when, for example, a new device used is added or a device used is removed. Furthermore, conflicts between routes also necessitate redefinition, making it difficult to respond flexibly to changing conditions.

An aim of the present disclosure, which has been made to solve the above problems, is to provide a logistics simulator device, a method of creating an operation plan, and a program that can quickly provide usable transport routes in response to changes in conditions, along with a method of operating steelworks efficiently.

### (Solution to Problem)

(1) A logistics simulator device according to an embodiment of the present disclosure is
   a logistics simulator device that simulates logistics for transporting materials to a subsequent process, the logistics simulator device comprising:
   an input information acquisition module configured to acquire a facility layout, an incoming plan, inventory information, an inventory site plan, an operation plan, an equipment capacity, and a start date/time, end date/time, and unit time of a simulation;
   a receiving plan generation module configured to generate one or more berths according to the facility layout, the incoming plan, and the inventory site plan, and generate a receiving plan for an inventory site;
   a route module configured to define connection relationships between facility elements in the simulation according to the facility layout;
   a processing material inventory site module configured to generate the inventory site, which is a facility element, according to the facility layout and manage inventory in the inventory site by increasing or decreasing the inventory;
   a processing facility warehouse module configured to generate one or more processing facilities, which are facility elements, according to the facility layout, set a maximum inventory and an initial inventory for the processing facilities according to the inventory information, increase or decrease inventory of the processing facilities, and create a dispatch plan;
   a processing facility module configured to determine an amount of inventory required in the processing facility warehouse module according to the operation plan; and
   a controller module configured to acquire the receiving plan and the dispatch plan, manage the receiving plan and the dispatch plan, and execute the simulation according to the equipment capacity and the start date/time, the end date/time, and the unit time of the simulation, wherein
   the controller module is configured to use the route module to search for a transportable route for the material, and
   the route module is configured to search for the transportable route by combining small routes, which are route segments delimited by the facility elements.
(2) As an embodiment of the present disclosure, in (1),
   the input information acquisition module is configured to acquire an equipment shutdown plan, and
   the route module is configured to search for the transportable route according to the equipment shutdown plan.
(3) As an embodiment of the present disclosure, in (1) or (2),
   a plurality of the transportable routes is listed.
(4) A method of creating an operation plan according to an embodiment of the present disclosure includes:
   acquiring a simulation result from the logistics simulator device according to any one of (1) to (3); and
   causing the logistics simulator device to acquire the operation plan modified based on the simulation result and execute the simulation again in a case in which it is determined from the simulation result that the simulation has terminated abnormally.
(5) A program according to an embodiment of the present disclosure is
   a program configured to cause a computer to function as a logistics simulator device that simulates logistics for transporting materials to a subsequent process, the program causing the computer to function as:
   an input information acquisition module configured to acquire a facility layout, an incoming plan, inventory information, an inventory site plan, an operation plan, an equipment capacity, and a start date/time, end date/time, and unit time of a simulation;
   a receiving plan generation module configured to generate one or more berths according to the facility layout, the incoming plan, and the inventory site plan, and generate a receiving plan for an inventory site;
   a route module configured to define connection relationships between facility elements in the simulation according to the facility layout;
   a processing material inventory site module configured to generate the inventory site, which is a facility element, according to the facility layout and manage inventory in the inventory site by increasing or decreasing the inventory;
   a processing facility warehouse module configured to generate one or more processing facilities, which are facility elements, according to the facility layout, set a maximum inventory and an initial inventory for the processing facilities, increase or decrease inventory of the processing facilities, and create a dispatch plan;
   a processing facility module configured to determine an amount of inventory required in the processing facility warehouse module according to the operation plan; and
   a controller module configured to acquire the receiving plan and the dispatch plan, manage the receiving plan and the dispatch plan, and execute the simulation according to the equipment capacity and the start date/time, the end date/time, and the unit time of the simulation, wherein
   the controller module is configured to use the route module to search for a transportable route for the material, and
   the route module is configured to search for the transportable route by combining small routes, which are route segments delimited by the facility elements.
(6) A method of operating steelworks according to an embodiment of the present disclosure,
   the subsequent process being a process of blending raw materials to be charged into a blast furnace,
   the method comprising:
      acquiring an optimized operation plan, which is the operation plan in a case where, in the method of creating an operation plan according to (4), it is determined from the simulation result that the simulation has terminated normally; and
      transporting the raw materials based on the optimized operation plan.

### (Advantageous Effect)

The present disclosure can provide a logistics simulator device, a method of creating an operation plan, and a program that can quickly provide usable transport routes in response to changes in conditions, along with a method of operating steelworks efficiently.

### BRIEF DESCRIPTION OF THE DRAWINGS

In the accompanying drawings:
FIG. 1 is a schematic diagram illustrating the logistics flow of coking coal charged into a blast furnace together with iron ore;
FIG. 2 is a diagram illustrating a schematic configuration of a logistics simulator device including its relationship with a higher-level system;
FIG. 3 is a diagram illustrating a configuration of a logistics simulator device according to an embodiment of the present disclosure;
FIG. 4 is a diagram illustrating a receiving plan;
FIG. 5 is a diagram illustrating a dispatch plan;
FIG. 6 is a diagram illustrating a table that defines small routes;
FIG. 7 is a diagram illustrating a line conflict table; and
FIG. 8 is a diagram illustrating a display example of the amount of inventory and the like.

### DETAILED DESCRIPTION

Hereinafter, a logistics simulator device, a method of creating an operation plan, a program, and a method of operating steelworks according to an embodiment of the present disclosure will be described with reference to the drawings.

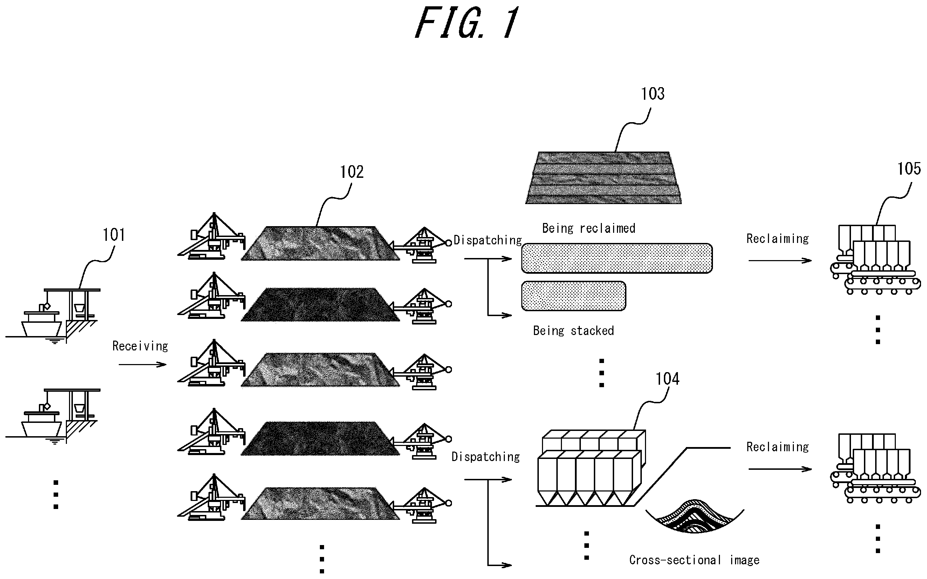

The logistics simulator device according to the present embodiment simulates the logistics of transporting materials to the subsequent process. Although the logistics targeted by the logistics simulator device are not limited, an example of logistics, carried out as part of the operation of a steelworks, for coking coal in coal stockyards 102 (see FIG. 1) is described in the present embodiment. In the iron and steel industry, iron ore, which is iron oxide, is charged into a blast furnace along with coke, is reduced, and is then refined to make steel. To promote a smooth reduction reaction in the blast furnace and avoid problems, the coke produced must have a certain degree of strength and quality, and a large number of different coking coals need to be blended. FIG. 1 illustrates the logistics flow of coking coal.

The coking coal is received from the berths 101 into the coal stockyards 102 and stored in piles by brand. The coal stockyards 102 are an example of an inventory site. The received coking coal is dispatched to the bedding yard 103 and the blending bin 104, which are the subsequent process, and is blended to achieve a predetermined quality. The bedding yard 103 and the blending bin 104 are examples of processing facilities. In the bedding yard 103, brands are blended by stacking them into piles called beds, which are used in pairs. When one of the beds is being stacked, the other is being reclaimed toward the coke oven 105, and by completing the stacking of the bed and switching it over before the reclaiming is completed, continuous reclaiming to the coke oven 105 is achieved. The blending bin 104 includes a plurality of bins each capable of storing approximately 400 t of coking coal. Various brands can be replenished into the plurality of bins and mixed on belt conveyors at the outlet while being reclaimed (see cross-sectional image in FIG. 1). In coking coal logistics operations, the top priority is to avoid stopping production in the downstream coke oven 105. Therefore, receiving operations from the berths 101 to the coal stockyards 102 are carried out as needed in the intervals between dispatching operations from the coal stockyards 102 to the subsequent process. The logistics simulator device according to the present embodiment targets the logistics of coking coal from receipt of the coking coal from the berths 101 to the coal stockyards 102, through dispatch of the coking coal to the bedding yard 103 and the blending bin 104, until reclaiming of the coking coal to the coke oven 105. Here, a coking coal logistics line including both the bedding yard 103 and the blending bin 104 is targeted in the present embodiment, but the logistics line may include only the bedding yard 103 or the blending bin 104.

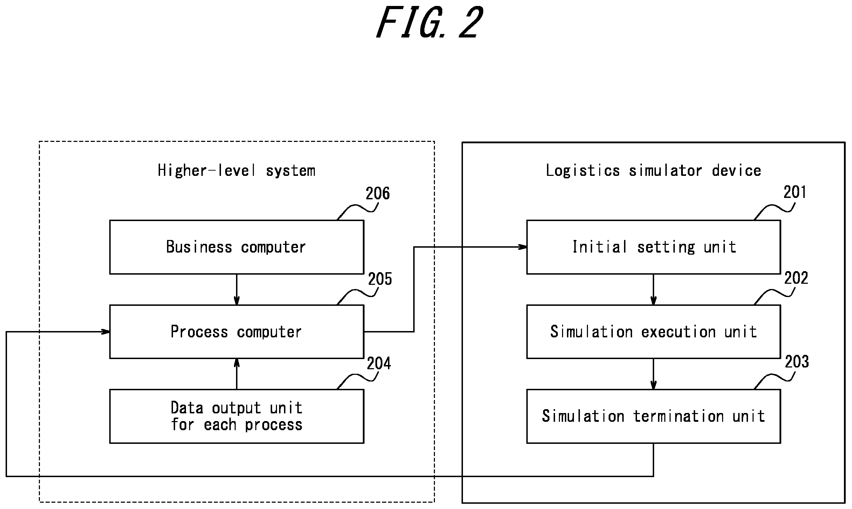

FIG. 2 is a diagram illustrating a schematic configuration of a logistics simulator device including its relationship with a higher-level system. The logistics simulator device includes an initial setting unit 201, a simulation execution unit 202, and a simulation termination unit 203. The higher-level system includes a data output unit 204 for each process, a process computer 205, and a business computer 206. The initial setting unit 201 of the logistics simulator device prepares data, initial parameters, and the like required for the simulation. The simulation execution unit 202 executes the simulation. The simulation termination unit 203 transmits the simulation results to the process computer 205. Data required for the simulation is acquired from the business computer 206 and the data output unit 204 for each process and is sent to the initial setting unit 201 via the process computer 205.

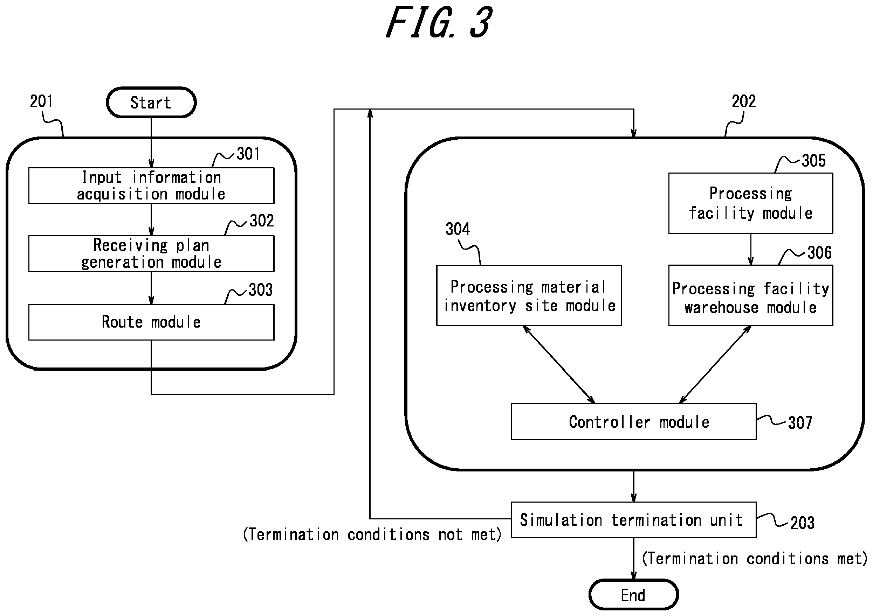

FIG. 3 is a diagram illustrating a configuration of a logistics simulator device according to an embodiment of the present disclosure. The arrows in FIG. 3 indicate the flow of processing. The initial setting unit 201 of the logistics simulator device includes an input information acquisition module 301, a receiving plan generation module 302, and a route module 303. The simulation execution unit 202 of the logistics simulator device includes a processing material inventory site module 304, a processing facility module 305, a processing facility warehouse module 306, and a controller module 307. Here, a module is a component that has the function of a device or facility simulated by the logistics simulator device and is configured to be easily added or replaced. In the present embodiment, the module is a program module in which input variables, output variables, and processing of the functions of the equipment or facilities to be simulated are defined.

The input information acquisition module 301 acquires a facility layout, an incoming plan, inventory information, an inventory site plan, an operation plan, an equipment capacity, and a start date/time, end date/time, and unit time of a simulation, which are required for the simulation. The unit time is the step time in the simulation. The simulation execution unit 202 starts the simulation at the start date/time of the simulation. The input information acquisition module 301 may also acquire an equipment shutdown plan.

The receiving plan generation module 302 generates one or more berths according to the facility layout and incoming plan acquired by the input information acquisition module 301. In addition, the receiving plan generation module 302 generates a receiving plan for yard 1 according to the incoming plan and inventory site plan acquired by the input information acquisition module 301. The receiving plan generation module 302 sends the generated receiving plan to the controller module 307.

The route module 303 defines the connection relationships between facility elements (for example, berths, belt conveyors, stacker-reclaimers, dump trucks, yards, and the like) in the simulation according to the facility layout acquired by the input information acquisition module 301.

The processing material inventory site module 304 generates a plurality of coal stockyards 102, which are facility elements in the simulation, according to the facility layout acquired by the input information acquisition module 301. Furthermore, the processing material inventory site module 304 manages the inventory in the plurality of coal stockyards 102 in the simulation by increasing or decreasing the inventory according to the receiving plan and the dispatch plan sent by the controller module 307.

The processing facility module 305 generates one or more coke ovens 105, which are facility elements in the simulation, according to the facility layout acquired by the input information acquisition module 301. The processing facility module 305 processes the coking coal in the simulation to produce coke according to the operation plan (particularly the production volume per hour) acquired by the input information acquisition module 301. That is, the processing facility module 305 determines the amount of inventory required in the processing facility warehouse module 306 according to the operation plan.

The processing facility warehouse module 306 generates one or more bedding yards 103 or blending bins 104, which are facility elements in the simulation, according to the facility layout acquired by the input information acquisition module 301. As described above, in the present embodiment, the logistics line includes both one or more bedding yards 103 and one or more blending bins 104, but the logistics line may instead include only one or more bedding yards 103 or one or more blending bins 104. The processing facility warehouse module 306 sets the maximum inventory and initial inventory for each of the bedding yards 103 and blending bins 104 according to the inventory information acquired by the input information acquisition module 301. The processing facility warehouse module 306 increases or decreases the inventory in the bedding yards 103 and the blending bins 104 in the simulation according to the operation plan acquired by the input information acquisition module 301. The processing facility warehouse module 306 creates a dispatch plan to dispatch appropriate amounts to the bedding yards 103 and the blending bins 104 when the inventory in the bedding yards 103 and the blending bins 104 falls below a predetermined threshold. The processing facility warehouse module 306 sends the generated dispatch plan to the controller module 307. The processing facility warehouse module 306 increases the inventory in the bedding yards 103 and the blending bins 104 in the simulation when the dispatch plan is executed.

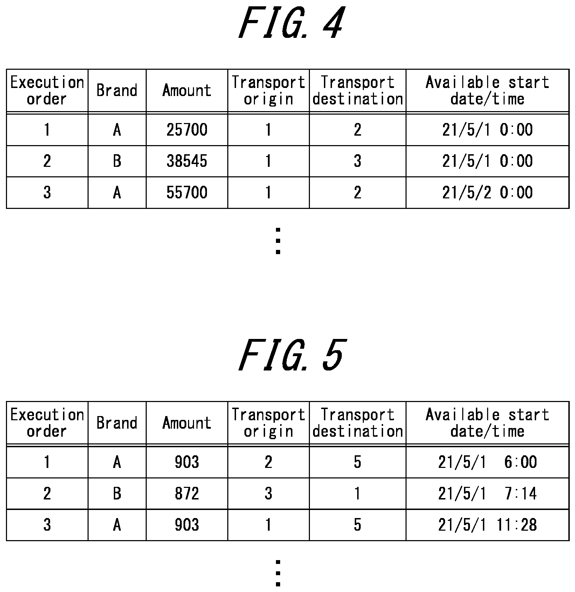

The controller module 307 acquires the receiving plan generated by the receiving plan generation module 302 and the dispatch plan generated by the processing facility warehouse module 306. The controller module 307 also manages the acquired receiving plan and dispatch plan and executes the simulation according to the start date/time, end date/time, and unit time. The controller module 307 manages the receiving plan and the dispatch plan by using the route module 303 to search for a transportable path (route) for materials and to update the receiving plan and the dispatch plan. In addition, the controller module 307 uses information on the equipment capacity as acquired by the input information acquisition module 301 to execute jobs for the receiving plan and the dispatch plan according to the execution order (for example, in order of the available start date/time) (see FIGS. 4 and 5).

The simulation termination unit 203 checks whether predetermined termination conditions for the simulation are met, and if the termination conditions are met, terminates the simulation using the updated receiving plan and dispatch plan and outputs the simulation results. The simulation results include, for example, the inventory in the plurality of coal stockyards 102. If the termination conditions are not met, the simulation termination unit 203 advances the unit time by 1, returns to the processing of the simulation execution unit 202, and continues the simulation.

The receiving plan generated by the receiving plan generation module 302 is maintained as a list as illustrated in FIG. 4. As described above, the receiving plan is generated according to the incoming plan and the inventory site plan acquired by the input information acquisition module 301. As illustrated in FIG. 4 and subsequent figures, the transport origin and transport destination are distinguished using numerical identifiers. In addition, brands are distinguished using symbolic identifiers. The amount (transport amount) may be expressed in units of, for example, tonnes (t), but in FIG. 4 and the following figures, the amount is expressed as a numerical value with a certain reference amount being "1". In the receiving plan, the available start date/time of each plan (one line in the list) is set to match the arrival date/time of the ship carrying the corresponding brand. Individual plans can be executed in any order after the available start date/time. Additionally, individual plans are removed from the list once they have been completed.

The dispatch plan generated by the processing facility warehouse module 306 is maintained as a list as illustrated in FIG. 5, similar to the receiving plan. Individual plans are removed from the list once they have been completed.

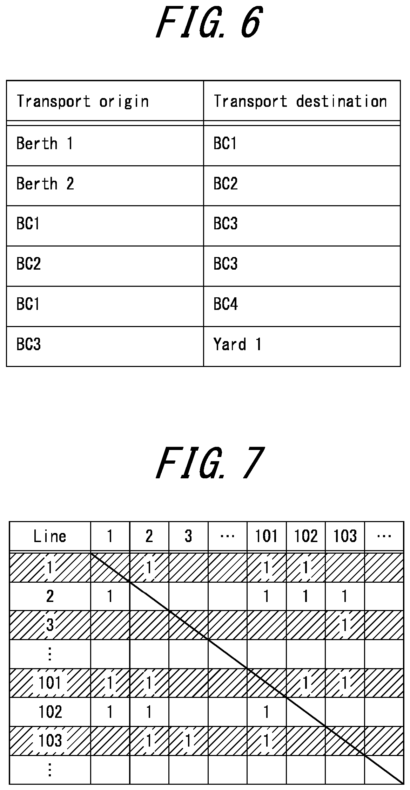

As described above, the controller module 307 uses the route module 303 to search for a transportable path (route) and update the receiving plan and the dispatch plan. In the present embodiment, the route module 303 generates a route by combining small routes such as those illustrated in FIG. 6. Here, the "route" refers to the logistics path that incoming goods take to their destination, and in the present embodiment, the route refers to the logistics path of coking coal from the berths 101 to the bedding yards 103 and the blending bins 104. A small route is a route segment delimited by facility elements (for example, berths, belt conveyors, stacker-reclaimers, dump trucks, yards, and the like) that exist along the route, and a route is formed by combining a plurality of small routes.

In the example of FIG. 6, "berth 1" and "berth 2" are two different berths 101. "BC1", "BC2", "BC3", and "BC4" are four different belt conveyors. "Yard 1" is one bedding yard 103. For example, the first line in FIG. 6 defines the route from "berth 1" to "BC1" as the first small route. For example, the second line in FIG. 6 defines the route from "berth 2" to "BC2" as the second small route. For example, the third line in FIG. 6 defines the route from "BC1" to "BC3" as the third small route. For example, the sixth line in FIG. 6 defines the route from "BC3" to "yard 1" as the sixth small route.

The route module 303 extracts facility elements according to the facility layout acquired by the input information acquisition module 301, creates a table defining small routes as illustrated in FIG. 6, and stores the table in an accessible storage unit (such as a memory). When searching for a transportable route, the route module 303 reads the table that defines small routes and determines the transportable route as a combination of small routes. For example, the route module 303 defines the "route from berth 1 to yard 1" as a combination of the first small route (from "berth 1" to "BC1"), the third small route (from "BC1" to "BC3"), and the sixth small route (from "BC3" to "yard 1"). For example, the route module 303 may define the same route as a combination of the first small route, two other small routes (from "BC1" to "BC2" and from "BC2" to "BC3"), and the sixth small route (from "BC3" to "yard 1").

The route module 303 may update the table that defines the small routes according to the facility layout when the number of facility elements increases or decreases. For example, when a new belt conveyor "BC5" is added, the route module 303 may perform an update to add a new small route (for example, from "berth 1" to "BC5") to the table. If, for example, "BC4" is removed due to a malfunction or the like, the route module 303 may update the table to delete any small routes that have "BC4" as the transport origin or transport destination. Furthermore, the route module 303 may search for a transportable route according to the equipment shutdown plan, acquired by the input information acquisition module 301, by excluding small routes that include facility elements scheduled to be shut down for maintenance or the like. For example, when "BC2" is shut down, the route module 303 may output "the route from berth 1 to yard 1" as a transportable route using a combination of the first small route, the third small route, and the sixth small route (a combination that does not include "BC2"). The route module 303 also searches for a transportable route by eliminating small routes that include conflicting facility elements. For example, if "BC2" is used in another plan, the route module 303 will not select a combination that includes "BC2". The route module 303 may, for example, then output "the route from berth 1 to yard 1" as a transportable route using a combination of the first small route, the third small route, and the sixth small route (a combination that does not include "BC2"). The number of transportable routes is not limited to one, and a plurality of transportable routes may be listed. When performing the simulation, the controller module 307 may select one of the plurality of listed transportable routes based on a preset rule or the like and perform the simulation using the selected transportable route. Here, the preset rule may, for example, be that the number of facility elements on the transportable route is equal to or less than a predetermined number. Furthermore, when the simulation is to be carried out, the user may, for example, use an input device or the like to select (specify) a target route. The simulation may also be performed for each of the listed plurality of transportable routes, and the results of each simulation may be output.

Here, a conventional method of selecting a route by listing candidate routes (logistics routes that incoming goods take to their destination) and eliminating conflicts serves as a comparative example. In such a conventional method, it is necessary to predefine a conflict table illustrating line conflicts, as illustrated in FIG. 7. In FIG. 7, a combination of lines marked with "1" indicates that a conflict occurs. Here, the line is a receiving line determined by a combination of a receiving origin, a receiving destination, and a device used, or a dispatch line determined by a combination of a dispatch origin, a dispatch destination, and a device used. In FIG. 7, the lines are distinguished using numerical identifiers. For example, if a new belt conveyor is added, the conflicting relationships must be redefined in this conventional method. That is, it is necessary to recreate the conflict table as illustrated in FIG. 7, which makes it difficult to respond flexibly to changes in conditions.

By contrast, the logistics simulator device according to the present embodiment enables flexible searches by having the route module 303 search for a transportable route using a combination of small routes that are route segments delimited by facility elements. Therefore, usable transport routes can be provided quickly in response to changes in conditions such as the addition, deletion, or conflict of facility elements.

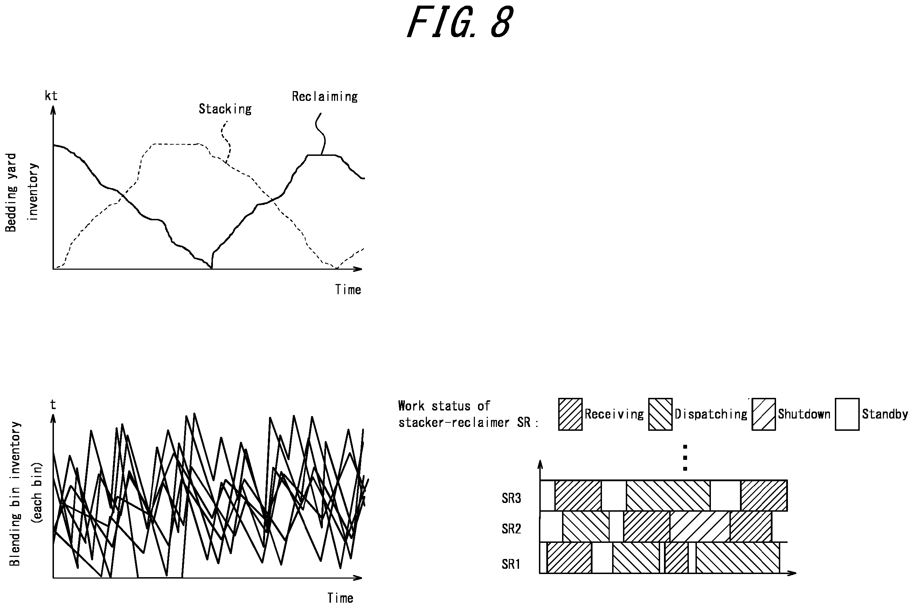

Referring again to FIG. 3, the simulation termination unit 203 terminates the simulation when preset termination conditions are reached. The termination conditions may include, for example, when the end date/time of the simulation as acquired by the input information acquisition module 301 is reached, or when the inventory in the bedding yards 103 or the blending bins 104 becomes insufficient. When the simulation is finished, the simulation results are output. The simulation results may include a flag indicating whether the job has terminated normally or abnormally, the actual receiving job results, the actual dispatch job results, and the like. Here, normal termination means that the simulation has terminated with the materials being transported without any shortage of inventory or the like. On the other hand, abnormal termination means that the simulation has terminated with an abnormality, such as a shortage of inventory or a dispatching job that was not completed by the end date/time. Furthermore, the job results refer to jobs that were completed by the deadline. Trend information, such as that illustrated in FIG. 8, may also be output as a simulation result. The trend information may, for example, include changes in inventory in the bedding yards 103 and changes in inventory in the blending bins 104. In addition to the inventory amount, the operation history of a stacker-reclaimer SR may also be displayed.

Information on inventory trends and the like, such as that illustrated in FIG. 8, may be output until the simulation is completed. For example, even if a simulation terminates abnormally, the contents of an alert can be confirmed in the higher-level system while viewing information such as inventory trends, and the input data such as the operation plan and inventory site plan can be corrected. Here, the operation plan includes a production plan (production volume) for the processing facilities. The production plan is, for example, a coke production plan for the coke oven 105. As will be described later, the target raw material may be iron ore, and in that case, the operation plan may include a sinter production plan, a pig iron production plan, or a raw material blending plan. Furthermore, the sinter production plan, pig iron production plan, and raw material blending plan determine the iron source supply, the amount of reductant used, the breakdown of the iron source and reductant, and the like to achieve the planned production of steel products at the steelworks. For the production of steel products at the steelworks, a production plan and an incoming plan for the steel products may be considered. A subsequent simulation using modified input data is expected to produce good results. Furthermore, the logistics simulator device can transmit the operation plan for when a good result is obtained (when the simulation has terminated normally), together with related simulation data, to the higher-level system via the process computer 205.

For example, a method of creating an operation plan that includes acquiring a simulation result from the logistics simulator device, for example, may be executed. The method of creating an operation plan may include causing the logistics simulator device to acquire the operation plan modified based on the simulation result and execute the simulation again in a case in which it is determined from the simulation result that the simulation has terminated abnormally. For example, the method of creating an operation plan may be performed in the higher-level system. For example, the process computer 205 may function as an operation plan creation device that executes the method of creating an operation plan and causes the logistics simulator device to execute the simulation again. Furthermore, in the method of creating an operation plan, a method of operating a steelworks may be executed, the method including acquiring an optimized operation plan, which is the operation plan in a case in which it is determined from the simulation result that the simulation has terminated normally, and transporting raw materials based on the optimized operation plan. Specifically, the method of operating a steelworks includes controlling the transport of raw materials by indicating the transport amount and the like via the process computer 205 to a control device for controlling the operation of each transport device that transports the raw materials. Here, the raw materials to be transported are raw materials to be blended in a subsequent process and charged into a blast furnace. The raw materials include the coking coal of the present embodiment but are not limited to coking coal. For example, various brands of iron ore exist. Each brand of iron ore is managed by being stored in a pile and is then appropriately blended before use. The concept of the present embodiment can therefore be applied to any one of the raw materials to be blended, such as coking coal or iron ore. Specifically, the logistics simulator device according to the above embodiment can, for example, similarly execute a method of creating an operation plan even if the object of logistics is iron ore, and the created operation plan can be used to execute a method of operating a steelworks. Furthermore, the blended raw materials also include auxiliary raw materials, and the concept of the present embodiment can also be applied to such auxiliary raw materials.

As described above, the logistics simulator device and method of creating an operation plan according to the present embodiment flexibly search for a transportable route by combining small routes, which are route segments delimited by facility elements, and can quickly provide usable transport routes in response to changes in conditions. By following the operation plan for the case in which such a simulation is terminated normally, an efficient method of operating a steelworks also becomes possible. Furthermore, by appropriately managing the inventory of each raw material brand, raw materials of uniform quality can be supplied consistently, which contributes to the production of high-quality steel materials.

While embodiments according to the present disclosure have been described with reference to the drawings and examples, it should be noted that various modifications and amendments may easily be implemented by those skilled in the art based on the present disclosure. Accordingly, such modifications and amendments are included within the scope of the present disclosure. For example, functions or the like included in each component, each step, or the like can be rearranged without logical inconsistency, and a plurality of components, steps, or the like can be combined into one or divided. An embodiment according to the present disclosure may also be realized as a storage medium (for example, a non-transitory computer-readable recording medium) having recorded thereon a program to be executed by a processor included in an apparatus. Such embodiments are also to be understood as included in the scope of the present disclosure.

In particular, configuring the logistics simulator device as a computer and having the processor of the computer execute a program to function as each module achieves the effect of eliminating the need for software modification (coding) when the facility layout is changed. In the above embodiment, the bedding yard 103 and the blending bin 104 have been described as both being included as processing facilities, but these do not need to be distinguished as modules. That is, by treating the bedding yard 103 as being configured virtually as a large number of bins refilled with various brands, the bedding yard 103 can be handled in the same way as the blending bin 104. In other words, the bedding yard 103 and the blending bin 104 can be treated as a common facility element in the simulation. This enables the processing facility warehouse module 306 to manage inventory increases and decreases and create dispatch plans more efficiently.

### REFERENCE SIGNS LIST

- 101: Berth
- 102: Coal stockyard
- 103: Bedding yard
- 104: Blending bin
- 105: Coke oven
- 201: Initial setting unit
- 202: Simulation execution unit
- 203: Simulation termination unit
- 204: Data output unit for each process
- 205: Process computer
- 206: Business computer
- 301: Input information acquisition module
- 302: Receiving plan generation module
- 303: Route module
- 304: Processing material inventory site module
- 305: Processing facility module
- 306: Processing facility warehouse module
- 307: Controller module

## Claims

1. A logistics simulator device that simulates logistics for transporting materials to a subsequent process, the logistics simulator device comprising:
an input information acquisition module configured to acquire a facility layout, an incoming plan, inventory information, an inventory site plan, an operation plan, an equipment capacity, and a start date/time, end date/time, and unit time of a simulation;
a receiving plan generation module configured to generate one or more berths according to the facility layout, the incoming plan, and the inventory site plan, and generate a receiving plan for an inventory site;
a route module configured to define connection relationships between facility elements in the simulation according to the facility layout;
a processing material inventory site module configured to generate the inventory site, which is a facility element, according to the facility layout and manage inventory in the inventory site by increasing or decreasing the inventory;
a processing facility warehouse module configured to generate one or more processing facilities, which are facility elements, according to the facility layout, set a maximum inventory and an initial inventory for the processing facilities according to the inventory information, increase or decrease inventory of the processing facilities, and create a dispatch plan;
a processing facility module configured to determine an amount of inventory required in the processing facility warehouse module according to the operation plan; and
a controller module configured to acquire the receiving plan and the dispatch plan, manage the receiving plan and the dispatch plan, and execute the simulation according to the equipment capacity and the start date/time, the end date/time, and the unit time of the simulation, wherein
the controller module is configured to use the route module to search for a transportable route for the material, and
the route module is configured to search for the transportable route by combining small routes, which are route segments delimited by the facility elements.

2. The logistics simulator device according to claim 1, wherein
the input information acquisition module is configured to acquire an equipment shutdown plan, and
the route module is configured to search for the transportable route according to the equipment shutdown plan.

3. The logistics simulator device according to claim 1 or 2, wherein a plurality of the transportable routes is listed.

4. A method of creating an operation plan, comprising:
acquiring a simulation result from the logistics simulator device according to any one of claims 1 to 3; and
causing the logistics simulator device to acquire the operation plan modified based on the simulation result and execute the simulation again in a case in which it is determined from the simulation result that the simulation has terminated abnormally.

5. A program configured to cause a computer to function as a logistics simulator device that simulates logistics for transporting materials to a subsequent process, the program causing the computer to function as:
an input information acquisition module configured to acquire a facility layout, an incoming plan, inventory information, an inventory site plan, an operation plan, an equipment capacity, and a start date/time, end date/time, and unit time of a simulation;
a receiving plan generation module configured to generate one or more berths according to the facility layout, the incoming plan, and the inventory site plan, and generate a receiving plan for an inventory site;
a route module configured to define connection relationships between facility elements in the simulation according to the facility layout;
a processing material inventory site module configured to generate the inventory site, which is a facility element, according to the facility layout and manage inventory in the inventory site by increasing or decreasing the inventory;
a processing facility warehouse module configured to generate one or more processing facilities, which are facility elements, according to the facility layout, set a maximum inventory and an initial inventory for the processing facilities according to the inventory information, increase or decrease inventory of the processing facilities, and create a dispatch plan;
a processing facility module configured to determine an amount of inventory required in the processing facility warehouse module according to the operation plan; and
a controller module configured to acquire the receiving plan and the dispatch plan, manage the receiving plan and the dispatch plan, and execute the simulation according to the equipment capacity and the start date/time, the end date/time, and the unit time of the simulation, wherein
the controller module is configured to use the route module to search for a transportable route for the material, and
the route module is configured to search for the transportable route by combining small routes, which are route segments delimited by the facility elements.

6. A method of operating a steelworks,
the subsequent process being a process of blending raw materials to be charged into a blast furnace,
the method comprising:
acquiring an optimized operation plan, which is the operation plan in a case where, in the method of creating an operation plan according to claim 4, it is determined from the simulation result that the simulation has terminated normally; and
transporting the raw materials based on the optimized operation plan.
